# DEMANDE DE BREVET EUROPEEN

(11) **EP 1 246 473 A1**
(43) Date de publication de la demande: **02.10.2002**
(21) Numéro de dépôt: 02076139.1
(22) Date de dépôt: 19.03.2002
(51) Int. Cl.: H04N 9/04, H04N 9/64

(54) **Appareil de prise de vue comportant un circuit d'amélioration de contour et procédé mis en oeuvre dans un tel appareil**

(30) Priorité: 27.03.2001 FR 0104106
(71) Demandeur: Koninklijke Philips Electronics N.V., 5621 BA Eindhoven (NL)
(72) Inventeur: Bompard, Frédéric, c/o Société Civile S.P.I.D., 75008 Paris (FR)
(74) Mandataire: Chaffraix, Jean

(57) **Abrégé**

Cet appareil de prise de vue comportant un circuit d'amélioration de contour (13) est formé à partir d'un capteur (3) composé d'éléments sensibles à différentes composantes de couleur de la vue présentant tout un spectre de fréquences spatiales, d'au moins un premier organe de filtrage d'image (10) pour les fréquences basses du spectre en , vue de traiter les signaux issus desdits éléments sensibles. Il est constitué par une première branche (Bi) dans laquelle est inséré le premier organe de filtrage (10), et par au moins une deuxième branche (B2) dans laquelle est inséré le circuit d'amélioration de contour (13) pour agir sur les fréquences hautes en tenant compte de tous les signaux issus desdits éléments et un dispositif de combinaison (16) pour fournir une image à partir des signaux de sortie desdites branches.

## Description

L'invention concerne un appareil de prise de vue comportant un circuit d'amélioration de contour, appareil formé à partir d'un capteur composé d'éléments sensibles à différentes composantes de couleur de la vue présentant tout un spectre de fréquences spatiales, d'au moins un premier organe de filtrage d'image pour les fréquences basses du spectre en vue de traiter les signaux issus desdits éléments sensibles.

L'invention concerne aussi un procédé mis en oeuvre dans un tel appareil.

Un appareil de ce genre est décrit dans le document de brevet des Etats-Unis d'Amérique N° 5 285 267. L'appareil décrit se rapporte plus à des applications TV qu'à des appareils de prise de vue photographique. Dans ce document, on propose un traitement basé sur les signaux de chrominance pour obtenir une amélioration de contour.

La présente invention propose un appareil du genre mentionné dans le préambule qui présente une autre approche pour l'amélioration de contour.

Pour cela, un tel appareil est remarquable en ce qu'il comporte une première branche dans laquelle est inséré ledit premier organe de filtrage, au moins une deuxième branche dans laquelle est inséré au moins un circuit d'amélioration de contour pour agir sur les fréquences hautes en tenant compte de tous les signaux issus desdits éléments et un dispositif de combinaison pour fournir une image à partir des signaux de sortie desdites branches.

Un procédé mis en oeuvre dans un tel appareil est remarquable en ce qu'il comporte les étapes suivantes :
- impression du capteur composé d'éléments sensibles aux différentes composantes de couleur de la vue,
- traitement des informations de ce capteur par une première branche de traitement opérant sur les éléments sensibles à la couleur,
- traitement des informations de ce capteur par une deuxième branche de traitement opérant sur tous les éléments sans tenir compte de la couleur et opérant sur la partie haute du spectre spatial, en vue d'améliorer les contours,
- combinaison des différentes informations élaborées par lesdites branches pour fournir une image d'utilisation.

L'idée de l'invention consiste donc à effectuer cette amélioration de contour sur la partie haute du spectre de fréquences spatiales, ce qui est obtenu par la prise en compte de tous les pixels du capteur sans considération de couleur.

La description suivante, faite en regard des dessins ci-annexés, le tout donné à titre d'exemples non limitatifs fera bien comprendre comment l'invention peut être réalisée. Sur les dessins :
La figure 1 montre un schéma de l'appareil conforme à l'invention.
La figure 2 montre plus en détail la structure d'un appareil conforme à l'invention.
La figure 3 montre la trace du spectre spatial traité par l'appareil conformément à l'invention.

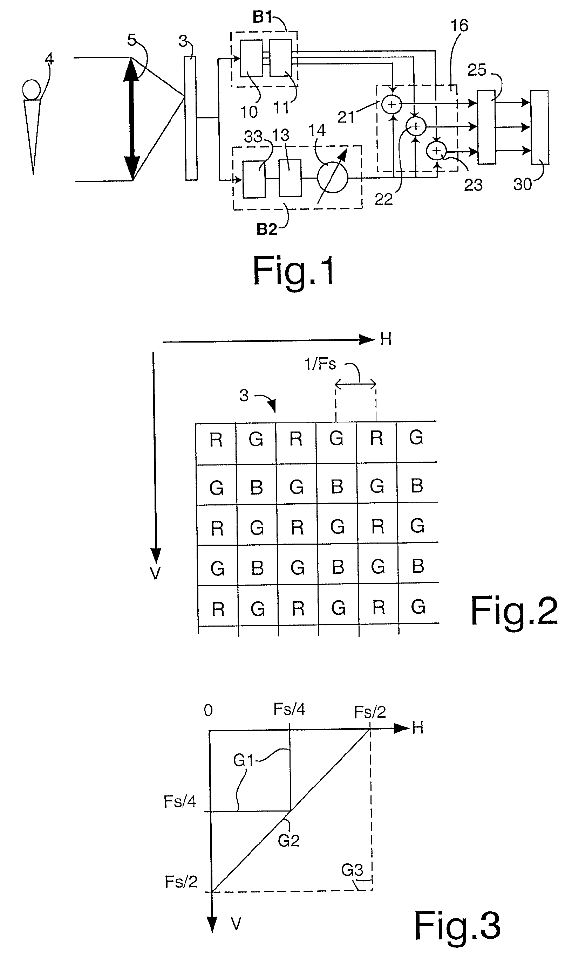

A la figure 1, on a représenté un appareil de prise de vue conforme à l'invention. La référence 3 indique le capteur comportant une pluralité d'éléments sensibles à différentes composantes de couleur. Le capteur est montré plus en détail à la figure 2. Sur ce capteur vient se focaliser le sujet 4, ce qui est obtenu par un objectif 5.

Les différents éléments de ce capteur, disposés en matrice selon des directions horizontale H et verticales V, sont sensibles aux trois couleurs primaires :
- bleu, ces éléments sont indiqués par la lettre « B » sur la figure 2
- rouge, ces éléments sont indiqués par la lettre « R » sur la figure 2
- vert, ces éléments sont indiqués par la lettre « G » sur cette même figure 2.

A la sortie de ce capteur, il est possible de recueillir différents signaux correspondant à chacune desdites composantes de couleur. Ces différentes composantes de couleur subissent une opération de filtrage effectuée par un premier organe de filtrage 10 (figure 1). Cette opération consiste en un filtrage à deux dimensions 2D habituel pour ce genre d'appareil et a pour but d'éviter les effets de moirés colorés, entre autres, dus à des chevauchements de spectre. Un filtrage de reconstruction de couleur 11 est relié à la sortie de cet organe 10, il permet de régulariser la perception des couleurs.

Selon l'invention cet organe de filtrage 10 et le filtre 11 sont mis dans une première branche B1, tandis que dans une deuxième branche B2 est inséré le circuit d'amélioration 13 destiné à améliorer le piqué de l'image. Ce circuit d'amélioration de contour 13 opère sur les signaux de tous les éléments du capteur 3 sans tenir compte de leur sensibilité aux différentes composantes de couleur. Il opère donc, notamment, sur la partie haute du spectre en fréquence spatiale de l'image. A la sortie de ce circuit, est associé un circuit de gain 14 qui permet de doser l'apport de ce circuit dans l'image finale.

Un dispositif de combinaison 16 combine les différents signaux issus des branches B1 et B2. Cette combinaison est une simple addition entre, d'une part, les signaux issus du circuit d'amélioration de contour 13 et du circuit de gain 14 et, d'autre part, les signaux relatifs à chacune des composantes de couleurs issus de la branche B1. Trois additionneurs 21, 22 et 23 sont prévus pour effectuer cette addition.

Au lieu d'avoir des informations d'images présentées sous forme de leur composantes dans lesdites couleurs primaires rouge vert et bleu, on souhaite avoir l'information sous la forme connue sous le nom Y, U, V. Ces différentes composantes Y, U et V représentent respectivement la luminance, une information sur le rouge et une information sur le bleu. Cette forme Y, U et V est surtout utilisée pour les signaux de télévision. On effectue cette opération au moyen d'un organe de transformation 25. Si on préfère n'avoir affaire qu'aux signaux R, G, B, cet organe de transformation 25 peut être considéré comme une matrice de filtrage unitaire, donc ne faisant aucune transformation. Les informations ainsi traitées sont finalement stockées dans une mémoire 30 d'où l'on pourra prélever les images ainsi prises.

De préférence, le circuit d'amélioration de contour 13 opère sur les fréquences hautes du spectre spatial. Pour cela un filtre passe-haut 33 peut être inséré dans la branche B2.

Le circuit 13 pour améliorer les contours peut avoir une fonction de filtrage en x/sin(x). Une autre fonction de filtrage donnée par la matrice suivante peut donner aussi des résultats intéressants :
-0,12 -0,21 -0,12
-0.21 2,32 -0,21
-0,12 -0,21 -0,12

Cette matrice s'applique comme on l'a déjà dit à tous les pixels du capteur 3. Pour plus de détails concernant l'établissement de cette matrice, on peut consulter le brevet des Etats Unis d'Amérique N 6 055 340. Ce calcul par matrice peut être combiné avec le filtre 33. Les différentes parties de spectre impliquées par l'invention sont explicitées à l'aide de la figure 3.

Ainsi, l'organe 10 a pour but de filtrer l'image selon un gabarit montré par la référence G1 à la figure 3. Sur cette figure 3, on montre la trace, dans un quadrant de l'espace, des différents spectres selon lesdites directions H et V. C'est un filtre passe-bas qui laisse passer les composantes de spectre inférieures à Fs/4.

1/Fs représente la distance entre pixels (figure 2), c'est à dire entre les éléments sensibles du capteur. Le gabarit G2 représente le filtrage sur les pixels G qui sont favorisés par la répartition effectuée sur la matrice montrée à la figure 2. Le circuit d'amélioration 13 peut opérer sur l'image dans la partie du spectre définie par le gabarit portant la référence G3 à la figure 3.

## Revendications

1. Appareil de prise de vue comportant un circuit d'amélioration de contour, appareil formé à partir d'un capteur composé d'éléments sensibles à différentes composantes de couleur de la vue présentant tout un spectre de fréquences spatiales, d'au moins un premier organe de filtrage d'image pour les fréquences basses du spectre en vue de traiter les signaux issus desdits éléments sensibles, **caractérisé en ce qu'**il comporte une première branche dans laquelle est inséré ledit premier organe de filtrage, au moins une deuxième branche dans laquelle est inséré au moins un circuit d'amélioration de contour pour agir sur les fréquences hautes en tenant compte de tous les signaux issus desdits éléments et un dispositif de combinaison pour fournir une image à partir des signaux de sortie desdites branches.

2. Appareil de prise de vue selon la revendication 1, **caractérisé en ce que** le circuit d'amélioration de contour est précédé par un filtre passe-haut pour sélectionner la partie haute du spectre spatial.

3. Appareil de prise de vue selon la revendication 1 ou 2, **caractérisé en ce que** le circuit d'amélioration de contour opère en effectuant une opération du genre x/sin(x).

4. Appareil de prise de vue selon la revendication 1 ou 2, **caractérisé en ce que** le circuit d'amélioration de contour opère en effectuant un calcul matriciel sur tous les éléments sensibles du capteur.

5. Appareil de prise de vue selon l'une des revendications 1 à 4, **caractérisé en ce qu'**il est prévu un circuit de gain pour faire varier l'apport du circuit d'amélioration de contour dans l'image.

6. Procédé de prise de vue mis en application dans un appareil de prise de vue, **caractérisé en ce qu'**il comporte les étapes suivantes :
- impression du capteur d'éléments sensibles aux différentes composantes de couleur de la vue,
- traitement des informations de ce capteur par une première branche de traitement opérant sur les éléments sensibles à la couleur,
- traitement des informations de ce capteur par une deuxième branche de traitement opérant sur tous les éléments sans tenir compte de la couleur et opérant sur la partie haute du spectre spatial en vue d'améliorer les contours,
- combinaison des différentes informations élaborées par lesdites branches pour fournir une image d'utilisation.

7. Procédé selon la revendication 6, **caractérisé en ce que** l'on opère un filtrage en x/sinx dans la deuxième branche en vue d'améliorer les contours, après éventuellement sélection de la partie haute du spectre spatial.
